# EUROPÄISCHE PATENTSCHRIFT

(11) **EP 4 274 675 B1**
(45) Veröffentlichungstag und Bekanntmachung des Hinweises auf die Patenterteilung: **26.06.2024**
(21) Anmeldenummer: 21836184.8
(22) Anmeldetag: 16.12.2021
(51) Int. Cl.: B01J 2/16, B01J 8/44

(54) **VERFAHREN ZUR BEHANDLUNG VON PARTIKELFÖRMIGEM MATERIAL IN EINEM FLUIDISIERUNGSAPPARAT**
METHOD FOR TREATING PARTICULATE MATERIAL IN A FLUIDIZING DEVICE
PROCÉDÉ DE TRAITEMENT DE MATIÈRE PARTICULAIRE DANS UN DISPOSITIF DE FLUIDISATION

(30) Priorität: 11.01.2021 DE 102021200163
(43) Veröffentlichungstag der Anmeldung: 15.11.2023
(73) Patentinhaber: Glatt Gesellschaft mit beschränkter Haftung, 79589 Binzen (DE)
(72) Erfinder: ZIMMERMANN, Dirk, 79664 Wehr (DE); GOTTSCHLING, Heinz, 79576 Weil am Rhein (DE); THIES, Jochen, 79540 Lörrach (DE)
(74) Vertreter: Patentanwälte Magenbauer & Kollegen Partnerschaft mbB
(86) Internationale Anmeldenummer: PCT/EP2021/086076
(87) Internationale Veröffentlichungsnummer: WO 2022/148623

(56) Entgegenhaltungen:
- EP-A2- 1 878 489
- DE-A1- 19 528 577
- DE-A1- 19 528 584
- JP-A- H07 265 683
- US-A1- 2003 190 417

## Beschreibung

Die Erfindung betrifft ein Verfahren zur Behandlung von partikelförmigem Material in einem Fluidisierungsapparat, mit einer eine Längsachse aufweisenden Fluidisierungseinheit, die einen die Fluidisierungseinheit in eine Verteilerkammer und eine oberhalb der Verteilerkammer angeordnete Fluidisierungskammer unterteilenden, perforierten Anströmboden aufweist, wobei die Fluidisierungskammer einen Materialeinlass für das zu behandelnde Material und die Verteilerkammer einen über einen eine Materialauslassfläche, eine untere und eine obere Kante aufweisenden Materialauslass für das behandelte Material verfügenden Materialaustrag umfasst, und eine Absperrvorrichtung den Materialaustrag verschließt und wobei die Verteilerkammer einen Fluideinlass und die Fluidisierungskammer einen Fluidauslass für ein vom Fluideinlass durch den perforierten Anströmboden zum Fluidauslass strömendes, das Material in der Fluidisierungskammer fluidisierendes Prozessgas umfasst, wobei in einem Betriebszustand zuerst die Fluidisierungskammer über den Materialeinlass mit zu behandelndem Material befüllt und danach das Material durch das durch die Fluidisierungskammer strömende Prozessgas behandelt wird.

Fluidisierungsapparate zur Behandlung von partikelförmigen Material und insbesondere Wirbelschichtapparate sind schon seit langem bekannt.

EP 2 611 531 A1 offenbart eine Fließbettapparatur zum Verarbeiten von partikelförmigem Material, die eine eine Verteilerkammer einschließende Kammer, einen perforierte, oberhalb der Verteilerkammer angeordneten Anströmboden, einen Einlass und einen Auslass für das Prozessgas und eine eine untere und einen obere Kante aufweisende, eine Höhe und eine Öffnungsfläche definierende Austragsöffnung umfasst, wobei der Anströmboden oberhalb der unteren Kante der Austragsöffnung derart positioniert ist, dass die Öffnungsfläche der Austragsöffnung in eine Öffnungsfläche unterhalb des Anströmbodens und eine Öffnungsfläche oberhalb des Anströmbodens geteilt ist.

Nachteilig hieran ist, dass das Prozessgas beim Austragen des partikelförmigen Materials an der Austragsöffnung eine Art Vorhang ausbildet, wenn es von der Verteilerkammer um den Anströmboden herum in die Fluidisierungskammer strömt. Dieser Vorhang schränkt den Austrag des partikelförmigen Materials zumindest teilweise ein und reduziert zugleich die Entleergeschwindigkeit des partikelförmigen Materials aus dem Fluidisierungsapparat.

Weitere gattungsgemässe Konzepte sind in DE 195 28 584 A1 und DE 195 28 577 A1 offenbart.

Aufgabe der Erfindung ist es daher einerseits die Entleerung eines Fluidisierungsapparates in Bezug auf die Entleergeschwindigkeit weiter zu verbessern und andererseits gleichzeitig die Nachteile des Standes der Technik zu überkommen. Die Aufgabe wird zudem bei einem Verfahren der eingangs genannten Art dadurch gelöst, dass die Verteilerkammer einen im Bereich der Materialauslassfläche angeordneten, sich zumindest teilweise in Umfangsrichtung erstreckenden Steg umfasst und nach dem Betriebszustand der relativ zur Fluidisierungseinheit bewegbar angeordnete Anströmboden derart in eine Entleerstellung bewegt wird, dass der Anströmboden im Entleerzustand derart am Steg angeordnet ist, dass sich eine Fluidverbindung zwischen dem in der Verteilerkammer angeordneten Materialauslass und der Fluidisierungskammer am Anströmboden vorbei ausbildet, und das behandelte Material über den Materialauslass aus der Fluidisierungseinheit ausgetragen wird, wobei im Entleerzustand in der Entleerstellung des Anströmbodens die Absperrvorrichtung den Materialaustrag freigibt.

Der Vorteil an dieser Ausgestaltung liegt darin, dass der Steg an dem der Anströmboden angeordnet ist den Prozessgasstrom daran hindert, im Bereich der Materialauslassfläche um den Anströmboden herum zu strömen und dadurch eine Art "Prozessgas-Vorhang" auszubilden, der den Austrag des behandelten Materials einschränkt oder ganz verhindert. Zudem verhindert der Steg, dass in der Fluidisierungskammer behandeltes Material beim Austrag durch den sich ergebenden Spalt zwischen Anströmboden und Verteilerkammerinnenwand in die Verteilerkammer fällt.

Weiter vorteilhaft kann durch die Relativbewegung zwischen Anströmboden und Fluidisierungseinheit das partikelförmige Material nach der Behandlung über den Materialaustrag entleert werden. Die Relativbewegung kann in einer Art und Weise ausgeführt werden, dass das Prozessgas die Entleerung des behandelten Materials über den Materialaustrag unterstützt.

Nach einer diesbezüglichen vorteilhaften Ausgestaltung des Verfahrens weist die Fluidisierungseinheit eine quer zur Längsachse der Fluidisierungseinheit verlaufende Schwenkachse auf, an der der Anströmboden schwenkbar angeordnet ist und um die der Anströmboden nach der Behandlung des partikelförmigen Materials geschwenkt wird, zweckmäßigerweise um 5° bis 10°. Durch diese Ausführung ist eine einfache Relativbewegung in Form einer Schwenkbewegung um die Schwenkachse möglich. Hierdurch wird zum einen bevorzugt der in der Verteilerkammer angeordnete Materialauslass des Materialaustrags für die Entleerung des in der Fluidisierungskammer behandelten Materials freigegeben und zum anderen wird die Entleerung durch die Schrägstellung des Anströmbodens befördert. Überdies wird der Anströmboden bevorzugt um die Schwenkachse um einen Winkel zwischen 0° und 60° geschwenkt, zweckmäßigerweise um einen Winkel von 5° bis 10°. Durch die Schwenkbewegung bildet sich zwischen dem Anströmboden und der Verteilerkammer und/oder der Fluidisierungskammer ein im Wesentlichen sichel- oder ringförmiger Spalt aus, der nicht zu groß werden darf, da hier ansonsten die Gefahr besteht, dass im Entleerzustand trotz der Durchströmung des Spalts mit Prozessgas behandeltes Material in die Verteilerkammer gelangen kann. Das Prozessgas dichtet zweckmäßigerweise den Spalt im Entleerzustand - dort wo der Steg nicht angeordnet ist - ab.

Nach einer ebenfalls diesbezüglichen vorteilhaften Ausgestaltung des Verfahrens ist der Anströmboden in Achsrichtung der Längsachse verschiebbar angeordnet und wird in Achsrichtung der Längsachse in Form einer Linearbewegung verschoben, zweckmäßigerweise bis der Anströmboden unterhalb der unteren Kante des Materialauslasses positioniert ist. Bevorzugt wird der Anströmboden in Achsrichtung der Längsachse verschoben. Auch durch die alternative Ausgestaltung wird der Materialauslass für eine verbesserte Entleerung nach der Behandlung des partikelförmigen Materials geöffnet.

Besonders bevorzugt führt der Anströmboden beim Verbringen in die Entleerstellung eine Schwenkbewegung und eine Linearbewegung aus. Hierbei wird der Anströmboden einerseits mittels einer Schwenkbewegung um die Schwenkachse verschwenkt und andererseits in Achsrichtung der Längsachse in Form einer Linearbewegung verschoben. Die Schenk- und die Linearbewegung können in beliebiger Reihenfolge nacheinander oder zeitgleich zueinander ausgeführt werden. Hierdurch kommen sowohl die Vorteile der Schwenk- als auch der Linearbewegung zum Tragen.

Gemäß einer zusätzlichen vorteilhaften Ausgestaltung des Verfahrens wird der Anströmboden in die Entleerstellung dergestalt relativ zur Fluidisierungseinheit bewegt, sodass zumindest ein Teil des Anströmbodens unterhalb der unteren Kante des Materialauslasses positioniert ist. Hierauf bezugnehmend wird der Anströmboden in die Entleerstellung dergestalt relativ zur Fluidisierungseinheit bewegt, sodass der Anströmboden unterhalb der unteren Kante des Materialauslasses positioniert ist. Alternativ ist die obere Kante oder die Oberseite des Anströmbodens mit der unteren Kante des Materialauslasses bündig angeordnet. In beiden Fällen ist die Materialauslassfläche maximal geöffnet, sodass eine Entleerung des behandelten Material effizient und schnell erfolgen kann.

Entsprechend einer zusätzlichen vorteilhaften Weiterbildung des Verfahrens weist der Materialaustrag eine Absperrvorrichtung auf, die den Materialaustrag freigibt, sobald der Anströmboden sich in der Entleerstellung befindet. Bevorzugt gibt die Absperrvorrichtung den Materialaustrag frei, sobald zumindest ein Teil des Anströmbodens unterhalb der unteren Kante des Materialauslasses positioniert ist. Hierdurch ist die Materialauslassfläche maximal groß geöffnet und das in der Fluidisierungskammer der Fluidisierungseinheit behandelte Material kann effektiv und zeitsparend aus der Fluidisierungseinheit des Fluidisierungsapparates ausgetragen werden.

Nach einer weiteren vorteilhaften Fortbildung des Verfahrens ist dem insbesondere als Entleerrohr ausgebildeten Materialaustrag ein einen Fluidanschlussauslass umfassender Fluidanschluss zur Bereitstellung eines Hilfsgases zugeordnet, wobei das Hilfsgas über den Fluidanschlussauslass in den Materialaustrag zumindest dann strömt, wenn die Absperrvorrichtung den Materialaustrag freigibt, um den Austrag des behandelten Materials zu fördern. Über den Fluidanschluss ist es möglich dem Materialaustrag ein Fluid, zweckmäßigerweise ein Hilfs oder Stützgas zuzuführen, um den Austrag an behandelten Material zu fördern und zu verbessern. Bevorzugt entspricht das Hilfsgas dem Prozessgas. Weiter bevorzugt wird das Hilfsgas vom Prozessgas abgezweigt und diesem nach dem Materialaustrag in einer Kreislauffahrweise wieder zugeführt.

Besonders bevorzugt ist der Fluidanschlussauslass, insbesondere ein Teil der perforierten Abdeckung oder der Bohrungen, derart ausgebildet, dass das Hilfsgas eine Ausströmungsrichtung in Richtung des Austrages des behandelten Materials aufweist. Diese sehr bevorzugte Weiterbildung fördert den Austrag des behandelten Materials weiter.

Nachfolgend wird ein Fluidisierungsapparat und dessen bevorzugte und vorteilhafte Ausgestaltungen näher beschrieben. Der Fluidisierungsapparat zur Behandlung von partikelförmigem Material, mit einer eine Längsachse aufweisenden Fluidisierungseinheit, die einen die Fluidisierungseinheit in eine Verteilerkammer und eine oberhalb der Verteilerkammer angeordnete Fluidisierungskammer unterteilenden, perforierten Anströmboden aufweist, wobei die Fluidisierungskammer einen Materialeinlass für das zu behandelnde Material und die Verteilerkammer einen über eine Materialauslassfläche, eine untere und eine obere Kante aufweisenden Materialauslass für das behandelte Material verfügenden Materialaustrag umfasst, und eine Absperrvorrichtung den Materialaustrag verschließt und wobei die Verteilerkammer einen Fluideinlass und die Fluidisierungskammer einen Fluidauslass für ein vom Fluideinlass durch den perforierten Anströmboden zum Fluidauslass strömendes, das Material in der Fluidisierungskammer fluidisierendes Prozessgas umfasst, wobei die Verteilerkammer einen im Bereich der Materialauslassfläche angeordneten, sich zumindest teilweise in Umfangsrichtung erstreckenden Steg umfasst und der Anströmboden relativ zur Fluidisierungseinheit bewegbar angeordnet ist, wobei der Anströmboden durch eine Bewegung des Anströmbodens relativ zur Fluidisierungseinheit in eine Entleerstellung verbringbar ist, wobei der Anströmboden im Entleerzustand derart am Steg angeordnet ist, dass sich eine Fluidverbindung zwischen dem in der Verteilerkammer angeordneten Materialauslass und der Fluidisierungskammer am Anströmboden vorbei ausbildet, um behandeltes Material aus der Fluidisierungseinheit auszutragen und wobei im Entleerzustand in der Entleerstellung des Anströmbodens die Absperrvorrichtung den Materialaustrag freigibt.

Der Vorteil an dieser Ausgestaltung liegt darin, dass der Steg an dem der Anströmboden angeordnet ist den Prozessgasstrom daran hindert, im Bereich der Materialauslassfläche um den Anströmboden herum zu strömen und dadurch eine Art "Prozessgas-Vorhang" auszubilden, der den Austrag des behandelten Materials einschränkt oder ganz verhindert. Zudem verhindert der Steg, dass in der Fluidisierungskammer behandeltes Material beim Austrag durch den sich ergebenden Spalt zwischen Anströmboden und Verteilerkammerinnenwand in die Verteilerkammer fällt.

Vorteilhafterweise kann durch die Relativbewegung zwischen Anströmboden und Fluidisierungseinheit das partikelförmige Material nach der Behandlung über den Materialaustrag entleert werden. Die Relativbewegung kann in einer Art und Weise ausgeführt werden, dass das Prozessgas die Entleerung des behandelten Materials über den Materialaustrag unterstützt.

Nach einer diesbezüglich vorteilhaften Ausgestaltung des Fluidisierungsapparates ist der Anströmboden in einer Betriebsstellung bevorzugt oberhalb der oberen Kante des Materialauslasses angeordnet. Ist der Anströmboden in Betriebsstellung befindet sich der Fluidisierungsapparat im Betriebszustand. Somit ist in der Betriebsstellung das Material ohne einen Materialaustrag über den Materialauslass in der Fluidisierungskammer behandelbar.

In der Entleerstellung ist der Anströmboden durch eine Bewegung des Anströmbodens relativ zur Fluidisierungseinheit bevorzugt zumindest teilweise unterhalb der oberen Kante des Materialauslasses positioniert. Ist der Entleerstellung befindet sich der Fluidisierungsapparat im Entleerzustand.

Entsprechend einer besonders vorteilhaften Weiterbildung des Fluidisierungsapparates ist eine Oberseite des Steges tangential an der Materialauslassfläche des Materialauslasses angeordnet oder entgegen der Strömungsrichtung des Prozessgases unterhalb des Materialauslasses angeordnet. Durch eine solche Anordnung des Steges in der Verteilerkammer wird der Austrag des behandelten Materials aus der Fluidisierungseinheit, insbesondere aus der Fluidisierungskammer, deutlich verbessert. Diesbezüglich ist zweckmäßigerweise die Oberseite des Steges tangential an der unteren Kante der Materialauslassfläche des Materialauslasses angeordnet. Diese Ausgestaltung ist besonders vorteilhaft, da so das behandelte Material barrierefrei aus der Fluidisierungseinheit austrabbar ist.

Überdies ist der Steg bevorzugt sichelförmig, insbesondere mondsichelförmig, oder ringförmig ausgebildet ist. Hierdurch wird die Prozessgasströmung am wenigsten stark beeinflusst, sodass die Fluidisierung des zu behandelnden Materials in der Fluidisierungskammer in der Betriebsstellung weiter sehr gut funktioniert.

Nach einer diesbezüglich vorteilhaften Ausgestaltung des Fluidisierungsapparates weist die Fluidisierungseinheit eine quer zur Längsachse der Fluidisierungseinheit verlaufende Schwenkachse auf, an der der Anströmboden schwenkbar angeordnet ist. Zweckmäßigerweise verläuft die Schwenkachse senkrecht zur zentralen Längsachse der Fluidisierungseinheit. Durch diese Ausführung ist eine einfache Relativbewegung in Form einer Schwenkbewegung um die Schwenkachse möglich. Hierdurch wird zum einen der in der Verteilerkammer angeordnete Materialauslass des Materialaustrags für die Entleerung des in der Fluidisierungskammer behandelten Materials geöffnet und zum anderen wird die Entleerung durch die Schrägstellung des Anströmbodens - wie auch bei Flüssigkeiten - befördert. Überdies wird der Anströmboden bevorzugt um die Schwenkachse um einen Winkel zwischen 0° und 60° geschwenkt, zweckmäßigerweise um einen Winkel von 5° bis 10°. Durch die Schwenkbewegung bildet sich zwischen dem Anströmboden und der Verteilerkammer und/oder der Fluidisierungskammer ein im Wesentlichen ringförmiger oder sichelförmiger Spalt aus, der nicht zu groß werden darf, da hier ansonsten die Gefahr besteht, dass im Entleerzustand trotz der Durchströmung des Spalts mit Prozessgas behandeltes Material in die Verteilerkammer gelangen kann. Prinzipiell wird der Spalt durch das Prozessgas abgedichtet. Im Bereich des Materialauslasses weist die Fluidisierungseinheit, insbesondere die Verteilerkammer, durch den sich zumindest teilweise in Umfangsrichtung erstreckenden Steg keinen Spalt auf. Der Anströmboden wird um die Schwenkachse verschwenkt und an dem Steg angeordnet.

In einer darüber hinaus vorteilhaften hierzu alternativen Ausgestaltung des Fluidisierungsapparates ist der Anströmboden in Achsrichtung der Längsachse verschiebbar angeordnet. Der Anströmboden wird in Achsrichtung der Längsachse in Form einer Linearbewegung verschoben. Zweckmäßigerweise wird der Anströmboden verschoben bis dessen Oberseite mit der unteren Kante bündig oder unterhalb dieser positioniert ist. Bevorzugt ist der Anströmboden in Achsrichtung der Längsachse verschiebbar angeordnet. Auch durch die alternative Ausgestaltung wird der Materialauslass für eine verbesserte Entleerung nach der Behandlung des partikelförmigen Materials geöffnet.

Des Weiteren vorteilhaft weist die Fluidisierungseinheit eine quer zur Längsachse der Fluidisierungseinheit verlaufende und in Achsrichtung der Längsachse verschiebbar angeordnete Schwenkachse auf, an der der Anströmboden schwenkbar angeordnet ist. Durch diese Ausgestaltung des Fluidisierungsapparates werden die Vorteile der beiden alternativen Ausgestaltungen des bevorzugten Fluidisierungsapparates, nämlich der Schwenk- und der Linearbewegung, kombiniert. Zudem ist - dort wo der Steg nicht angeordnet ist - der sich ausbildende Spalt zwischen Fluidisierungseinheit und Anströmboden kleiner.

Gemäß einer zusätzlichen vorteilhaften Ausbildung des Fluidisierungsapparates ist der Anströmboden, insbesondere die Oberseite des Anströmbodens, in der Entleerstellung durch die Bewegung des Anströmbodens relativ zur Fluidisierungseinheit zumindest teilweise unterhalb der unteren Kante des Materialauslasses positioniert. Besonders bevorzugt ist der Anströmboden, insbesondere die Oberseite des Anströmbodens, in der Entleerstellung durch die Bewegung des Anströmbodens relativ zur Fluidisierungseinheit unterhalb der unteren Kante des Materialauslasses positioniert. Hierdurch ist die Materialauslassfläche maximal geöffnet, sodass eine Entleerung des behandelten Material effizient und schnell erfolgen kann.

Vorteilhafterweise ist dem insbesondere als Entleerrohr ausgebildeten Materialaustrag ein einen Fluidanschlussauslass umfassender Fluidanschluss zur Bereitstellung eines Hilfsgases zugeordnet. Über den Fluidanschluss ist es möglich dem Materialaustrag ein Fluid, zweckmäßigerweise ein Hilfs oder Stützgas zuzuführen, um den Austrag an behandelten Material zu fördern und zu verbessern. Bevorzugt entspricht das Hilfsgas dem Prozessgas. Weiter bevorzugt wird das Hilfsgas vom Prozessgas abgezweigt und diesem nach dem Materialaustrag in einer Kreislauffahrweise wieder zugeführt.

Diesbezüglich weist der Materialaustrag entsprechend einer Fortbildung des Fluidisierungsapparates einen Einlegeboden auf, der den Materialaustrag in einen das behandelte Material aus der Fluidisierungseinheit transportierenden Materialkanal und einen das Hilfsgas führenden Fluidkanal unterteilt, wobei im Einlegeboden der Fluidanschlussauslass angeordnet ist, sodass das Hilfsgas aus dem Fluidkanal in den Materialkanal überströmen kann. Hierdurch wird eine sehr einfache und platzsparende Konstruktion für das Einbringen des Hilfsgases, insbesondere von Hilfsluft, bereitgestellt.

Bevorzugt weist der Fluidanschlussauslass eine perforierte Abdeckung auf oder ist durch Bohrungen im Einlegeboden ausgebildet. Durch die perforierte Abdeckung oder die entsprechend ausgestalteten Bohrungen wird verhindert, dass das aus der Fluidisierungseinheit auszutragende, behandelte Material in den Fluidanschluss fällt und diesen verstopft. Besonders bevorzugt ist der Fluidanschlussauslass, insbesondere ein Teil der perforierten Abdeckung oder der Bohrungen, derart ausgebildet, dass das Hilfsgas eine Ausströmungsrichtung in Richtung des Austrages des behandelten Materials aufweist. Diese sehr bevorzugte Weiterbildung fördert den Austrag des behandelten Materials weiter.

Zweckmäßigerweise ist der Fluidanschlussauslass im Bereich der Materialauslassfläche angeordnet. Hierdurch wird sichergestellt, dass das Hilfsgas das auszutragende, behandelte Material direkt nach dem Materialauslass fördert und/oder unterstützt.

Bevorzugt wird das Verfahren auf dem zuvor beschriebenen Fluidisierungsapparat betrieben.

Nachfolgend wird die Erfindung anhand der beiliegenden Zeichnung näher erläutert und in dieser zeigen
- Figur 1: eine Draufsicht auf eine schematische Darstellung einer ersten Ausführungsform eines Fluidisierungsapparates in Betriebsstellung mit einer Schnittebene A-A,
- Figur 2: einen Schnitt entlang der in Fig. 1 dargestellten Schnittebene A-A durch die schematische Darstellung der ersten Ausführungsform des Fluidisierungsapparates in Betriebsstellung mit einem auf einer Schwenkachse angeordneten Anströmboden in horizontaler Position,
- Figur 3: einen Schnitt entlang der in Fig. 1 dargestellten Schnittebene A-A durch die schematische Darstellung der ersten Ausführungsform des Fluidisierungsapparates in Entleerstellung mit dem auf der Schwenkachse angeordneten Anströmboden in einer um einen Winkel α um die Schwenkachse geschwenkten Position,
- Figur 4: eine Draufsicht auf die schematische Darstellung der ersten Ausführungsform des Fluidisierungsapparates in Entleerstellung,
- Figur 5: eine schematische Darstellung einer Projektion einer einen Steg und einen Materialauslass umfassenden Innenseite der Verteilerkammer der ersten Ausführungsform des Fluidisierungsapparates in Entleerstellung,
- Figur 6: eine Draufsicht auf eine schematische Darstellung einer zweiten Ausführungsform eines Fluidisierungsapparates in Betriebsstellung mit einer Schnittebene A-A,
- Figur 7: einen Schnitt entlang der in Fig. 6 gezeigten Schnittebene A-A durch die schematische Darstellung der zweiten Ausführungsform des Fluidisierungsapparates in Betriebsstellung mit einem in einer Ebene Z-Z angeordneten Anströmboden in horizontaler Position,
- Figur 8: einen Schnitt entlang der in Fig. 6 gezeigten Schnittebene A-A durch die schematische Darstellung der zweiten Ausführungsform des Fluidisierungsapparates in Entleerstellung mit dem in einer Ebene Z'-Z' angeordneten Anströmboden in horizontaler Position,
- Figur 9: eine vergrößerte Darstellung des in Fig. 8 dargestellten Ausschnitts A,
- Figur 10: eine Draufsicht auf eine schematische Darstellung einer dritten Ausführungsform eines Fluidisierungsapparates in Betriebsstellung mit einer Schnittebene A-A,
- Figur 11: einen Schnitt entlang der Schnittebene A-A aus Fig. 10 durch die schematische Darstellung der dritten Ausführungsform des Fluidisierungsapparates in Betriebsstellung mit einem in einer Ebene Z-Z angeordneten Anströmboden in horizontaler Position,
- Figur 12: einen Schnitt entlang der Schnittebene A-A aus Fig. 10 durch die schematische Darstellung der dritten Ausführungsform des Fluidisierungsapparates in Entleerstellung, wobei der Anströmboden in eine Ebene Z'-Z' in Achsrichtung der Längsachse X-X verschobenen und um eine Schwenkachse um einen Winkel α geschwenkt ist,
- Figur 13: eine Draufsicht auf eine schematische Darstellung einer vierten Ausführungsform eines Fluidisierungsapparates in Betriebsstellung mit einer Schnittebene A-A,
- Figur 14: einen Schnitt entlang der Schnittebene A-A aus Fig. 13 durch die schematische Darstellung der vierten Ausführungsform des Fluidisierungsapparates in Betriebsstellung mit einem in einer Ebene Z-Z angeordneten Anströmboden in horizontaler Position und einem einen Einlegeboden umfassenden Materialaustrag,
- Figur 15: einen Schnitt entlang der in Fig. 13 dargestellten Schnittebene A-A durch die schematische Darstellung der ersten Ausführungsform des Fluidisierungsapparates in Entleerstellung mit dem auf der Schwenkachse angeordneten Anströmboden in einer um einen Winkel α um die Schwenkachse geschwenkten Position,
- Figur 16: eine Draufsicht auf die schematische Darstellung der vierten Ausführungsform des Fluidisierungsapparates in Entleerstellung,
- Figur 17: eine schematische Darstellung einer Projektion einer einen Steg und einen Materialauslass umfassenden Innenseite der Verteilerkammer der vierten Ausführungsform des Fluidisierungsapparates in Entleerstellung,
- Figur 18: eine Draufsicht auf eine schematische Darstellung einer fünften Ausführungsform eines Fluidisierungsapparates in Betriebsstellung mit einer Schnittebene A-A und
- Figur 19: einen Schnitt entlang der in Fig. 18 dargestellten Schnittebene A-A durch die schematische Darstellung der fünften Ausführungsform des Fluidisierungsapparates in Entleerstellung mit dem auf der Schwenkachse angeordneten Anströmboden in einer um einen Winkel α um die Schwenkachse geschwenkten Position.

Sofern keine anderslautenden Angaben gemacht werden, bezieht sich die nachfolgende Beschreibung auf sämtliche in der Zeichnung illustrierten Ausführungsformen eines Fluidisierungsapparates 1 zur Behandlung von partikelförmigem Material M.

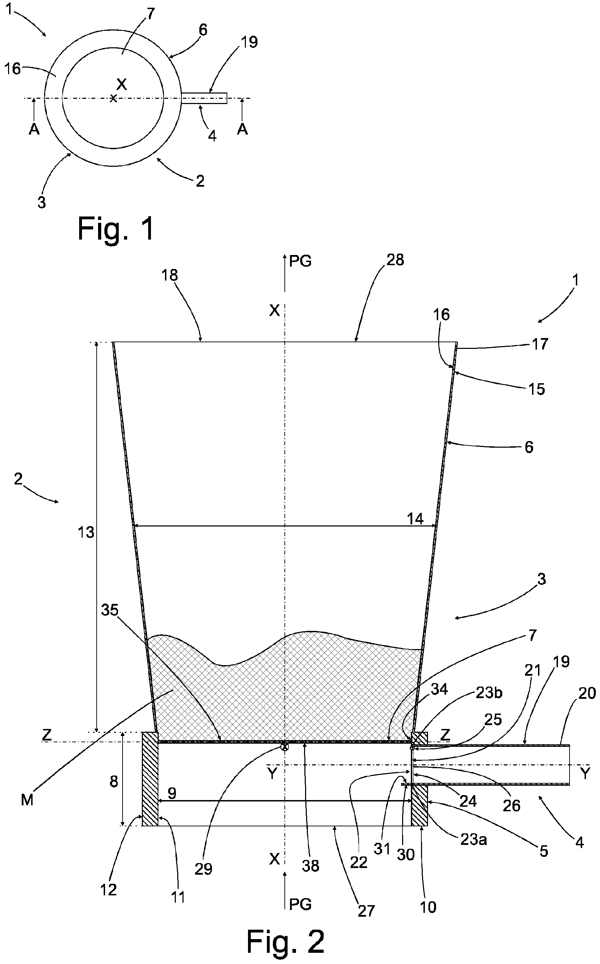

Fig. 1 zeigt eine Draufsicht auf eine schematische Darstellung einer ersten Ausführungsform des als Wirbelschichtapparat 2 ausgebildeten Fluidisierungsapparates 1 mit einer Schnittebene A-A. Der Fluidisierungsapparat 1 umfasst eine eine zentrale Längsachse X-X aufweisende Fluidisierungseinheit 3 an der ein eine senkrecht zur Längsachse X-X stehende Mittelachse Y-Y umfassendes Entleerrohr 4 angeordnet ist. Die Mittelachse Y-Y und die Längsachse X-X spannen die Schnittebene A-A auf. Der Fluidisierungsapparat 1 befindet sich im Betriebszustand.

In der Fig. 2 wird ein Schnitt entlang der in Fig. 1 gezeigten Schnittebene A-A durch die schematische Darstellung der ersten Ausführungsform des als Wirbelschichtapparat 2 ausgebildeten Fluidisierungsapparates 1 in Betriebsstellung dargestellt.

Die Fluidisierungseinheit 3 umfasst einen die Fluidisierungseinheit 3 in eine Verteilerkammer 5 und eine oberhalb der Verteilerkammer 5 angeordnete Fluidisierungskammer 6 unterteilenden, perforierten Anströmboden 7. Der Anströmboden 7 liegt in Betriebsstellung in einer senkrecht zur Schnittebene A-A aufgespannten Ebene Z-Z, sodass in Betriebsstellung zu behandelndes Material M in der Fluidisierungskammer 6 oberhalb des Anströmbodens 7 angeordnet ist. Ist der Anströmboden 7 in Betriebsstellung befindet sich der Fluidisierungsapparat 1 im Betriebszustand.

Die Fluidisierungseinheit 3 des als Wirbelschichtapparat 2 ausgebildeten Fluidisierungsapparates 1 ist rotationssymmetrisch um die zentrale Längsachse X-X ausgebildet. Andere geometrische Formen, wie rechteckig, insbesondere quadratisch, sind in anderen nicht gezeigten Ausführungsformen realisiert.

In der in Fig. 2 gezeigten Ausführungsform weist die Verteilerkammer 5 eine kreiszylindrische Form mit einem über einer Verteilerkammerhöhe 8 konstanten Verteilerkammer-Innendurchmesser 9 auf. Die Verteilerkammer 5 verfügt über eine radial zur Längsachse X-X beabstandete Verteilerkammerwand 10. Die Verteilerkammerwand 10 weist eine als Verteilerkammerinnenwand 11 bezeichnete Innenfläche der Verteilerkammerwand 10 und eine als Verteilerkammeraußenwand 12 bezeichnete Außenfläche der Verteilerkammerwand 10 auf.

Auch die Fluidisierungskammer 6 ist in der dargestellten Ausführungsform kreiszylindrisch ausgebildet, wobei die Fluidisierungskammer 6 im Gegensatz zur Verteilerkammer 5 eine konische Form mit einem über einer Fluidisierungskammerhöhe 13 von unten nach oben größer werdenden Fluidisierungskammer-Innendurchmesser 14 aufweist. Die Fluidisierungskammer 6 verfügt über eine über eine radial zur Längsachse X-X beabstandete Fluidisierungskammerwand 15. Die Fluidisierungskammerwand 15 weist eine als Fluidisierungskammerinnenwand 16 bezeichnete Innenfläche der Fluidisierungskammerwand 15 und eine als Fluidisierungskammeraußenwand 17 bezeichnete Außenfläche der Fluidisierungskammerwand 15 auf.

Die Fluidisierungskammer 6 umfasst zudem einen Materialeinlass 18 für das zu behandelnde Material M und die Verteilerkammer 5 einen Materialaustrag 19 für das behandelte Material M'. Der Materialaustrag 19 ist insbesondere als das eine Entleerrohrwand 20 aufweisende Entleerrohr 4 ausgebildet, das in der in Fig. 2 dargestellten Ausführungsform senkrecht zur Längsachse X-X der Fluidisierungseinheit 3 rotationssymmetrisch um die Mittelachse Y-Y in der Verteilerkammerwand 10 angeordnet ist. Hierbei ist ein Materialauslass 21 des Materialaustrags 19 derart angeordnet, dass der Materialauslass 21 bündig mit der Verteilerkammerinnenwand 11 ausgebildet ist. Der Materialauslass 21 weist eine Materialauslassfläche 22 auf und verfügt über eine untere und eine obere Kante 23a, 23b für den Austrag des in der Fluidisierungskammer 6 behandelten Materials M'.

Der Materialauslass 21 des Materialaustrages 19 weist eine Absperrvorrichtung 24 auf. Die Absperrvorrichtung 24 ist in der Betriebsstellung des Anströmbodens 7 geschlossen. Die Absperrvorrichtung 24 ist zweckmäßigerweise als eine um eine Schwenkachse 25 schwenkbare Klappe 26 ausgebildet. Im Betriebszustand ist somit der Materialaustrag 19 der Fluidisierungseinheit 3 des Fluidisierungsapparates 1 geschlossen. Die Absperrvorrichtung 24 kann des Weiteren im als Entleerrohr 4 ausgebildeten Materialaustrag 19 in Richtung der Mittelachse Y-Y an anderer Position angeordnet sein.

Darüber hinaus weist die Verteilerkammer 5 einen Fluideinlass 27 und die Fluidisierungskammer 6 einen Fluidauslass 28 auf. In der in Fig. 2 gezeigten Betriebsstellung ist der perforierte Anströmboden 7 in horizontaler Position in der Ebene Z-Z angeordnet, wobei ein Prozessgas PG am Fluideinlass 27 in die Fluidisierungseinheit 3 eintritt und von dem Fluideinlass 27 durch den perforierten Anströmboden 7 zum Fluidauslass 28 strömt, wo es aus der Fluidisierungseinheit 3 austritt. Der perforierte Anströmboden 7 weist zweckmäßigerweise nicht dargestellte Durchtrittsöffnungen für das Prozessgas PG auf, die beim Durchströmen einen Druckverlust erzeugen. Das Prozessgas PG fluidisiert im Betriebszustand, also in der Betriebsstellung des Anströmbodens 7, das zu behandelnde Material M in der Fluidisierungskammer 6.

Der Anströmboden 7 ist in der Fluidisierungseinheit 3 relativ zur Fluidisierungseinheit 3 bewegbar angeordnet. In der in Fig. 2 gezeigten Ausführungsform des Fluidisierungsapparates 1 weist die Fluidisierungseinheit 3 eine quer zur Längsachse X-X der Fluidisierungseinheit 3 verlaufende Schwenkachse 29 auf, an der der Anströmboden 7 schwenkbar angeordnet ist. In der dargestellten ersten Ausführungsform des Fluidisierungsapparates 1 verläuft die Schwenkachse 29 zweckmäßigerweise senkrecht zur Längsachse X-X der Fluidisierungseinheit 3 und senkrecht zur Mittelachse Y-Y des Entleerrohrs 4. Im in Fig. 2 dargestellten Betriebszustand des Fluidisierungsapparates 1 ist der Anströmboden 7 oberhalb der oberen Kante 23b angeordnet. Hierdurch wird sichergestellt, dass während der Behandlung des partikelförmigen Materials M durch das Prozessgas PG in der Fluidisierungskammer 6 kein Material M aus der Fluidisierungseinheit 3 des Fluidisierungsapparates 1 ausgetragen wird.

Überdies weist die Verteilerkammer 5 einen im Bereich der Materialauslassfläche 22 angeordneten, sich zumindest teilweise in Umfangsrichtung erstreckenden Steg 30 auf. Eine Oberseite 31 des Steges 30 ist tangential an der Materialauslassfläche 22 des Materialauslasses 21 angeordnet. Zweckmäßigerweise ist die Oberseite 31 des Steges 30 tangential an der unteren Kante 23a der Materialauslassfläche 22 des Materialauslasses 22 angeordnet. Der Steg 30 ist hierbei sichelförmig ausgebildet, insbesondere mondsichelförmig.

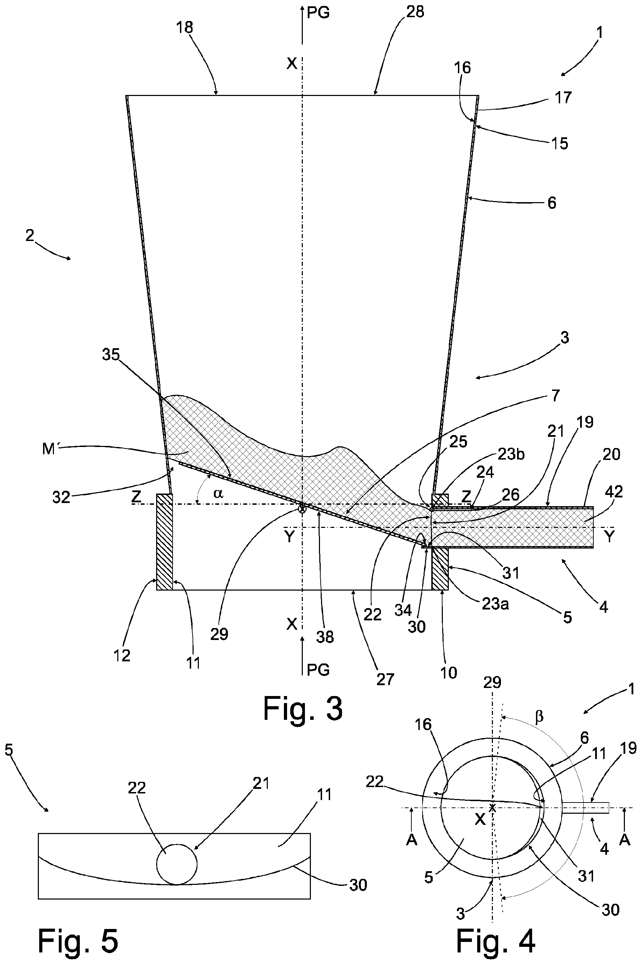

Fig. 3 zeigt den als Wirbelschichtapparat 2 ausgebildeten Fluidisierungsapparat 1 im Entleerzustand. Nach der Behandlung des partikelförmigen Materials M im Wirbelschichtapparat 2 wird das behandelte Material M' im Entleerzustand aus dem Fluidisierungsapparat 1 durch den Materialkanal 42 ausgetragen. Hierzu wird der in eine Entleerstellung verbringbare Anströmboden 7 relativ gegenüber der Fluidisierungseinheit 3 in Form einer Schwenkbewegung bewegt, sodass dieser in Entleerstellung um eine Schwenkachse 29 geschwenkt in der Fluidisierungseinheit 3 positioniert ist. Ist der Anströmboden 7 in Entleerstellung befindet sich der Fluidisierungsapparat 1 im Entleerzustand.

In Entleerstellung ist der Anströmboden 7 derart um einem Winkel α um die Schwenkachse 29 geschwenkt, dass der Anströmboden 7 am Steg 30 angeordnet ist. Hierdurch bildet sich eine Fluidverbindung zwischen dem in der Verteilerkammer 5 angeordneten Materialauslass 22 und der Fluidisierungskammer 6 am Anströmboden 7 vorbei aus, um behandeltes Material aus der Fluidisierungseinheit 3 auszutragen. Zweckmäßigerweise ist der Anströmboden 7 um einen Winkel von 5° bis 10° geschwenkt. Hierdurch fließt das behandelte Material M' in Richtung des Materialauslasses. Unterstützt wird der Austrag des behandelten Materials M' durch das Prozessgas PG, das auch im Entleerzustand vom Fluideinlass 27 zum Fluidauslass 28 durch die Fluidisierungseinheit 3 des Fluidisierungsapparates 1 strömt.

Sobald der Anströmboden 7 im Entleerzustand in der Entleerstellung an dem Steg 30 angeordnet ist gibt die Absperrvorrichtung 24 den Materialaustrag 19 frei. Sodann erfolgt der Austrag des in der Fluidisierungseinheit 3 behandelten Materials M'. Bevorzugt im Entleerzustand die Absperrvorrichtung 24 möglichst weit geöffnet, sodass die Materialauslassfläche 22 des Materialauslasses 21 maximal groß wird, wodurch zusätzlich ein verbesserter Austrag des behandelten Materials M' befördert wird.

In der Entleerstellung bildet sich aufgrund der Schwenkbewegung durch den um die Schwenkachse 29 geschwenkten Anströmboden 7 ein Spalt 32 zwischen Anströmboden 7 und Fluidisierungseinheit 3, insbesondere zwischen Anströmboden 7 und Verteilerkammerinnenwand 11 und/oder der Fluidisierungskammerinnenwand 16, der sich im Wesentlichen um den gesamten Umfang des Anströmbodens 7 erstreckt. Eine hierbei ausgebildete Spaltbreite variiert. Durch den Spalt 32 strömt im Entleerzustand Prozessgas PG, sodass behandeltes Material M' beim Austrag von der Fluidisierungskammer 6 nicht in die Verteilerkammer 5 gelangen oder fallen kann.

Im Bereich des Materialauslasses 21 verhindert der Steg 30 zum einen das Gelangen oder Fallen des auszutragenden Materials M' und zum anderen hindert der Steg 30, an dem der Anströmboden 7 angeordnet ist, den Prozessgasstrom daran, im Bereich der Materialauslassfläche 22 um den Anströmboden 7 herum zu strömen und dadurch eine Art "Prozessgas-Vorhang" auszubilden, der den Austrag des behandelten Materials einschränkt oder ganz verhindert.

In der Fig. 4 wird eine Draufsicht auf eine schematische Darstellung der ersten Ausführungsform eines Fluidisierungsapparates 1 entsprechend Fig. 1 gezeigt, wobei sich der Fluidisierungsapparat 1 im Entleerzustand befindet. Hierbei ist der Anströmboden 7 in einer um die Schwenkachse 29 um den Winkel α geschwenkten Position am Steg 30 angeordnet, wodurch sich zwischen dem Anströmboden 7 und der Fluidisierungseinheit 3, insbesondere der Verteilerkammerinnenwand 11 und/oder der Fluidisierungskammerinnenwand 16, der in der Spaltbreite variierende Spalt 32 ausbildet. Durch den Spalt 32 strömt während des Entleervorgangs Prozessgas PG, sodass kein behandeltes Material M' in die Verteilerkammer 5 gelangen kann.

Im Bereich der Materialauslassfläche 22 erstreckt sich der an in der Verteilerkammer 5 angeordnete Steg 30 in Umfangsrichtung. Die Oberseite 31 des Steges 30 ist tangential an der unteren Kante 23a der Materialauslassfläche 22 des Materialauslasses 22 angeordnet. Der Steg 30 ist hierbei sichelförmig ausgebildet, insbesondere mondsichelförmig. Der Steg 30 weist einen Winkel β von 160° auf. In anderen hier nicht gezeigten Ausführungsformen weist der Steg 30 bevorzugt einen Winkel β von 5° bis 180°, bevorzugter von 10° bis 60° auf.

Fig. 5 zeigt eine schematische Darstellung einer Projektion einer den Steg 30 und einen Materialauslass 21 umfassenden Verteilerkammerinnenwand 11 der ersten Ausführungsform des Fluidisierungsapparates 1 in Entleerstellung. Wie bereits in Fig. 4 beschrieben ist die Oberseite 31 des Steges 30 tangential an der unteren Kante 23a der Materialauslassfläche 22 des Materialauslasses 21 angeordnet. Die Materialauslassfläche 22 ist dadurch maximal groß geöffnet. Die in Fig. 5 nicht dargestellte Absperrvorrichtung 24 gibt in der Entleerstellung den Materialaustrag 19 frei, sodass das behandelte Material M' aus der Fluidisierungskammer 6 über die maximale geöffnete Materialauslassfläche 22 der Fluidisierungseinheit 3 effizient austragbar ist. Die projizierte Darstellung umfasst den sichelförmig ausgebildeten Steg 30, wobei der Steg 30 einen Winkel β von etwa 160° aufweist.

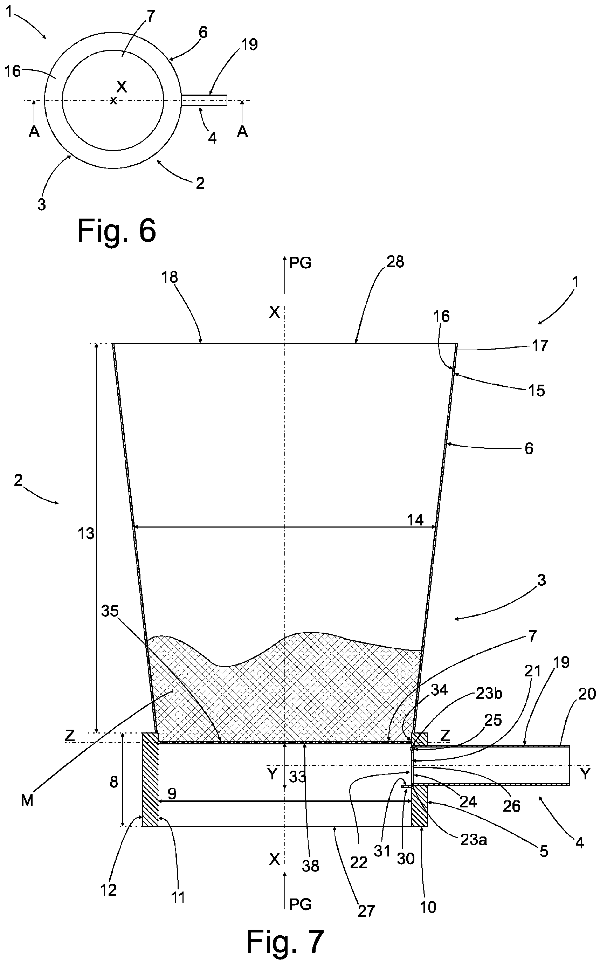

Fig. 6 zeigt entsprechend Fig. 1 eine Draufsicht auf eine schematische Darstellung einer zweiten Ausführungsform des als Wirbelschichtapparat 2 ausgebildeten Fluidisierungsapparates 1 mit einer Schnittebene A-A. Der Fluidisierungsapparat 1 umfasst eine eine zentrale Längsachse X-X aufweisende Fluidisierungseinheit 3 an der ein eine senkrecht zur Längsachse X-X stehende Mittelachse Y-Y umfassendes Entleerrohr 4 angeordnet ist. Die Mittelachse Y-Y und die Längsachse X-X spannen die Schnittebene A-A auf. Der Fluidisierungsapparat 1 befindet sich im Betriebszustand.

Ein Schnitt entlang der Schnittebene A-A aus Fig. 6 durch die schematische Darstellung der zweiten Ausführungsform des sich im Betriebszustand befindenden Fluidisierungsapparates 1 ist in Fig. 7 dargestellt. Der Anströmboden 7 liegt in Betriebsstellung in einer senkrecht zur Schnittebene A-A aufgespannten Ebene Z-Z, sodass zu behandelndes Material M im Betriebszustand in der Fluidisierungskammer 6 oberhalb des Anströmbodens 7 angeordnet und dort fluidisierbar und behandelbar ist.

Überdies ist die zweite Ausführungsform des Fluidisierungsapparates 1 im Wesentlichen baugleich mit der ersten Ausführungsform des Fluidisierungsapparates 1 ausgebildet. Die beiden Ausführungsformen unterscheiden sich in der technischen Ausführung der zwischen Fluidisierungseinheit 3 und Anströmboden 7 ausgeführten Relativbewegung. Anstelle der Schwenkbewegung - wie in der ersten Ausführungsform - führt der Anströmboden 7 in der zweiten Ausführungsform eine Linearbewegung in Achsrichtung 33 der Längsachse X-X aus. Der Anströmboden 7 ist somit in Achsrichtung 33 der Längsachse X-X verschiebbar angeordnet.

Darüber hinaus ist der Steg 30 entgegen der Strömungsrichtung des Prozessgases unterhalb des Materialauslasses 22 angeordnet ist, was die zweite Ausführungsform von der ersten Ausführungsform weiter unterscheidet. Der Steg 30 ist somit von der unteren Kante 23a der Materialauslassfläche 22 beabstandet angeordnet. Insbesondere ist der Abstand c in nicht gezeigten Ausführungsformen verschwindend gering, zweckmäßigerweise gleich Null.

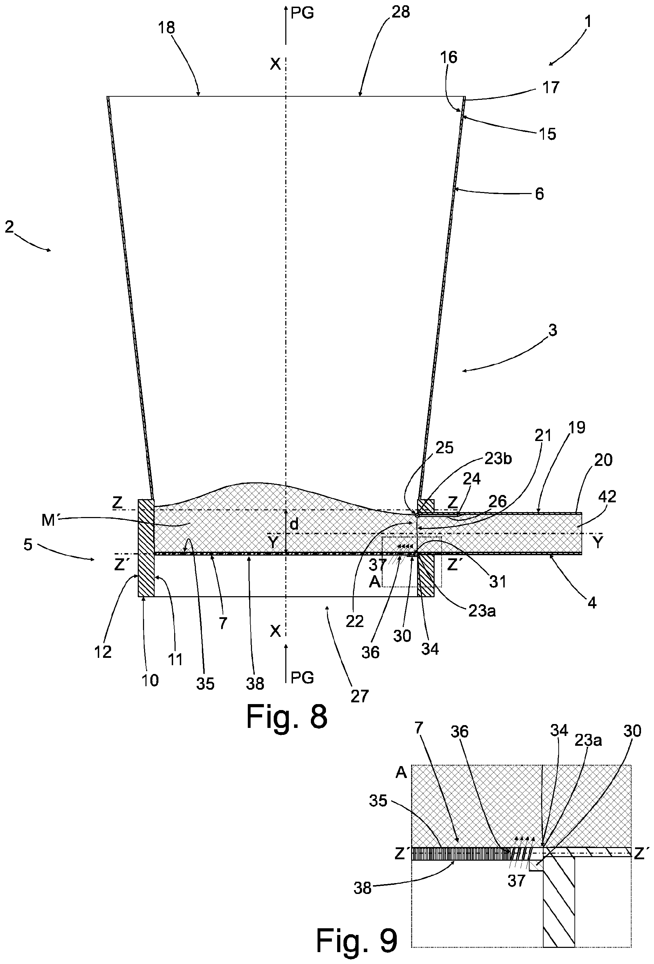

In Fig. 8 wird ein Schnitt entlang der Schnittebene A-A aus Fig. 6 durch die schematische Darstellung der zweiten Ausführungsform des Fluidisierungsapparates 1 mit einem in einer Ebene Z'-Z' angeordneten Anströmboden 7 in horizontaler Position, der Entleerstellung, gezeigt. Die Ebene Z'-Z' verläuft parallel zur Ebene Z-Z in einem Abstand d. Der Anströmboden 7 ist um den Abstand d in Achsrichtung 33 der zentralen Längsachse X-X nach unten verschoben, d. h. aus der Ebene Z-Z in die Ebene Z'-Z'. Der Anströmboden 7 liegt in der gezeigten Ausführungsform auf dem Steg 30 auf, sodass zweckmäßigerweise eine obere Kante 34 des Anströmbodens 7 und/oder eine Oberseite 35 auf der gleichen Höhe angeordnet ist wie die untere Kante 23a des Materialauslasses 21. Die obere Kante 34 und/oder Oberfläche 35 des Anströmbodens 7 sind insbesondere tangential an der unteren Kante 23a des Materialauslasses 21 angeordnet. Somit ist die Materialauslassfläche 22 des Materialauslasses 21 vollständig geöffnet, sodass der Austrag an behandelten Material M' durch den Materialkanal 42 verbessert erfolgen kann.

Zweckmäßigerweise ist im perforierten Anströmboden 7 im Bereich des Materialauslasses 21 wenigstens eine Austragsöffnung 36 angeordnet, insbesondere mehrere Austragsöffnungen 36, die entsprechend den dargestellten Pfeilen 37 hin zum Materialauslass 21 ausgerichtet sind. Hierdurch wird im Entleerzustand der Austrag des behandelten Materials M' durch das Prozessgas PG zusätzlich unterstützt.

Fig. 9 zeigt eine vergrößerte Darstellung des in Fig. 8 dargestellten Ausschnitts A, der den Bereich des Materialauslasses 21 darstellt. Der perforierte Anströmboden 7 weist Durchtrittsöffnungen 38 auf durch die das Prozessgas PG strömt um das zu behandelnde, partikelförmige Material M in der Fluidisierungskammer 6 zu fluidisieren. Die Durchtrittsöffnungen 38 sind beliebig anordenbar, wobei die Durchtrittsöffnungen 38 den spezifischen Anforderungen an die Fluidisierung und/oder Behandlung des Materials M entsprechend in Anzahl und Durchtrittsöffnungs-Durchmesser ausgebildet sind.

Im Bereich des Materialauslasses 21 sind im perforierten Anströmboden 7 Austragsöffnungen 36 angeordnet. Das Prozessgas PG strömt in Richtung der Pfeile 37 durch die Austragsöffnungen 36 und unterstützt so in der Entleerstellung einen effizienten und schnellen Austrag des behandelten Materials M'. Die Austragsöffnungen 36 können bspw. in einem Kreissektor vor dem Materialauslass 21 angeordnet sein. Zudem ist die obere Kante 34 und/oder die Oberseite 35 des Anströmbodens 7 bis auf die Höhe der unteren Kante 23a des Materialauslasses 21 bündig abgesenkt, wodurch der Austrag von behandeltem Material M' zusätzlich aufgrund der größtmöglichen Materialauslassfläche 22 gefördert und begünstigt wird.

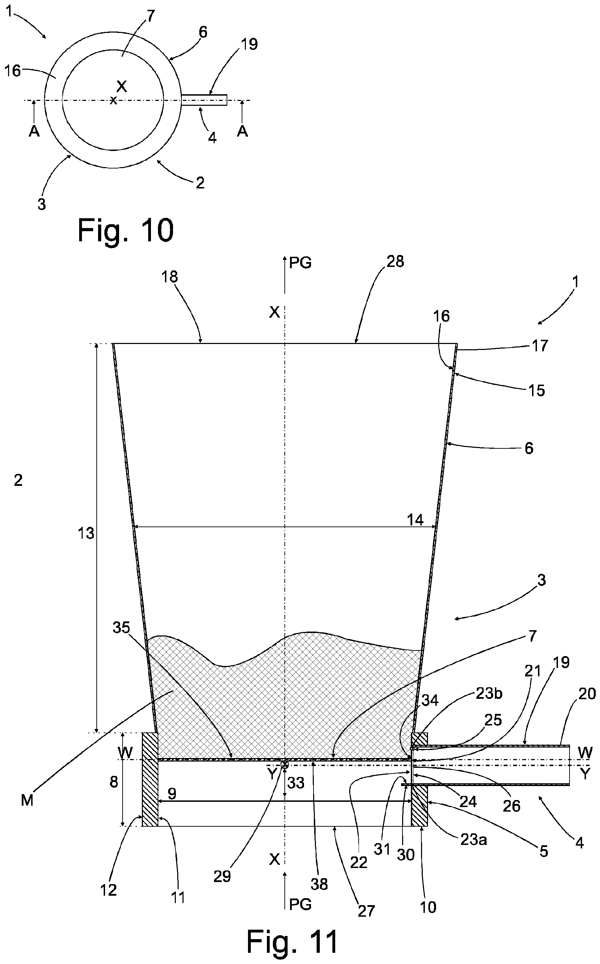

Fig. 10 zeigt eine Draufsicht auf eine schematische Darstellung einer dritten Ausführungsform des als Wirbelschichtapparat 2 ausgebildeten Fluidisierungsapparates 1 mit einer Schnittebene A-A. Der Fluidisierungsapparat 1 umfasst eine eine zentrale Längsachse X-X aufweisende Fluidisierungseinheit 3 an der ein eine senkrecht zur Längsachse X-X stehende Mittelachse Y-Y umfassendes Entleerrohr 4 angeordnet ist, wobei die Mittelachse Y-Y und die Längsachse X-X die Schnittebene A-A aufspannen. Der Fluidisierungsapparat 1 befindet sich im Betriebszustand.

In der Figur 11 wird ein Schnitt entlang der Schnittebene A-A aus Fig. 9 durch die schematische Darstellung der dritten Ausführungsform des Fluidisierungsapparates 1 im Betriebszustand mit einem in einer Ebene W-W angeordneten Anströmboden 7 in horizontaler Position gezeigt.

Die dritte Ausführungsform des Fluidisierungsapparates 1 ist im Wesentlichen eine Kombination der ersten beiden Ausführungsformen. Auch in der dritten Ausführungsform ist der Anströmboden 7 relativ zu der Fluidisierungseinheit 3 bewegbar. Im Unterschied zur ersten und zweiten Ausführungsform ist der Anströmboden 7 der dritten Ausführungsform geeignet einerseits eine Schwenkbewegung um die Schwenkachse 29 und andererseits eine Linearbewegung in Achsrichtung 33 der Längsachse X-X auszuführen. Im dargestellten Betriebszustand wird das partikelförmige Material M in der Fluidisierungskammer 6 behandelt.

Die Schwenk- und die Linearbewegung des Anströmbodens beim Verbringen des Anströmbodens 7 aus der Betriebsstellung in die Entleerstellung können in beliebiger Reihenfolge nacheinander oder zeitgleich zueinander ausgeführt werden. Hierdurch kommen sowohl die Vorteile der Schwenk- als auch der Linearbewegung zum Tragen. In der vorliegenden Ausführungsform wird die Schwenk- und Linearbewegung gleichzeitig ausgeführt.

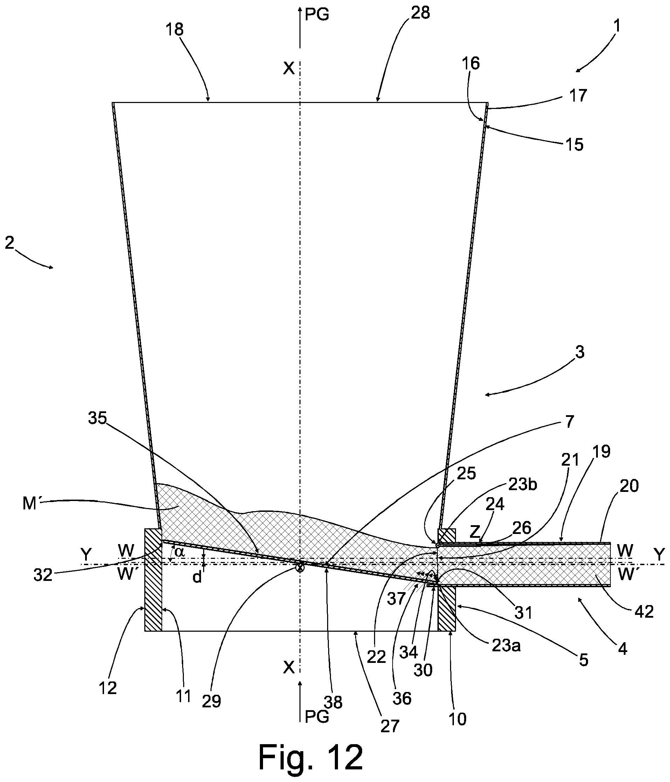

Der Materialaustrag 19 weist eine um eine Schwenkachse 25 verschwenkbare Absperrvorrichtung 24 auf. Die Absperrvorrichtung 24 ist zweckmäßigerweise als Klappe 26, Ventil oder Zellradschleuse oder dergleichen ausgebildet. Die in der dritten Ausführungsform als Klappe 26 ausgebildete Absperrvorrichtung 24 verschließt den Materialaustrag 19 oder gibt diesen frei. In dem in Fig. 11 dargestellten Betriebszustand - der Anströmboden 7 befindet sich oberhalb der unteren Kante 23a und unterhalb der oberen Kante 23b des Materialauslasses 21 - verschließt die Absperrvorrichtung 24 den Materialaustrag 19. Somit kann weder Prozessgas PG noch zu behandelndes Material M aus der Fluidisierungseinheit 3 des Fluidisierungsapparates 1, insbesondere aus der Fluidisierungskammer 6, ausströmen oder ausgetragen werden. In der gezeigten Ausführungsform ist die Klappe 26 um eine normal zur Mittelachse Y-Y angeordnete Schwenkachse 25 schwenkbar. Fig. 12 zeigt einen Schnitt entlang der Schnittebene A-A aus Fig. 10 durch die schematische Darstellung der dritten Ausführungsform des Fluidisierungsapparates 1.

Im Entleerzustand wird das in der Fluidisierungskammer 6 behandelte, partikelförmige Material M' aus der Fluidisierungseinheit 3 des Fluidisierungsapparates 1 über den als Entleerrohr 4 ausgebildeten den Materialkanal 42 umfassenden Materialaustrag 19 ausgetragen. Die Absperrvorrichtung 24 ist hierbei um die Schwenkachse 25 verschwenkt und gibt den Materialaustrag 19 im Entleerzustand - der Anströmboden befindet sich zumindest teilweise unterhalb der oberen Kante 23b des Materialauslasses 21 - frei.

Der Anströmboden 7 ist hierbei zum einen um die Schwenkachse 29 um einen Winkel α geschwenkt und zum anderen ist die Schwenkachse 29 von einer Ebene W-W in eine parallel zur Ebene W-W ausgerichtete Ebene W'-W' in Achsrichtung 33 der Längsachse X-X verschoben. Durch das Absenken der Schwenkachse 29 des Anströmbodens 7 von einer Ebene W-W in eine parallele um den Abstand d verschobene Ebene W'-W' und das gleichzeitige Schwenken des Anströmbodens 7 um die Schwenkachse 29 wird ein verbesserter Austrag des behandelten Materials M' aus der Fluidisierungskammer 6 bewirkt. In der gezeigten Ausführungsform ist die Ebene W'-W' oberhalb der Mittelachse Y-Y angeordnet. Dadurch bedingt, ist es möglich den Winkel α, um den der Anströmboden 7 um die Schwenkachse 29 geschwenkt ist, klein zu halten, sodass der sich zwischen Anströmboden 7 und Fluidisierungseinheit 3, insbesondere Verteilerkammerinnenwand 11 und/oder Fluidisierungskammerinnenwand 16, bildende Spalt 32 minimiert wird. Dies führt zu einem weiter verbesserten Austrag des behandelten Materials M'.

Die Oberseite 35 des Anströmbodens 7 ist in der Entleerstellung oberhalb der unteren Kante 23a des Materialauslasses 21 positioniert. Der die Absperrvorrichtung 24 aufweisende Materialaustrag 19 ist von der um die Schwenkachse 25 verschwenkten Absperrvorrichtung 24 freigegeben, sodass das behandelte Material M' unterstützt von durch die Austragsöffnungen 36 strömenden Prozessgas PG ausgetragen werden kann.

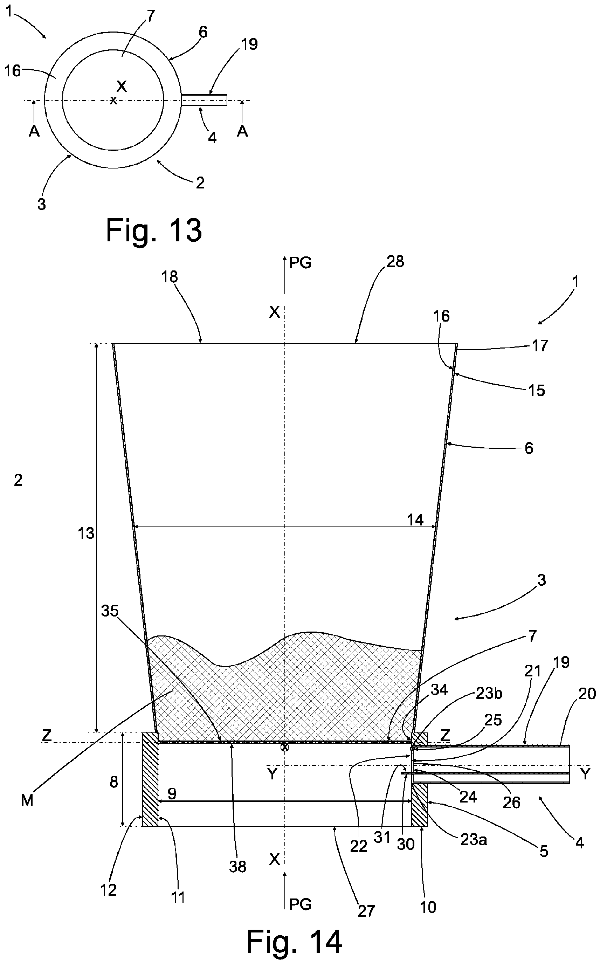

Die in den Fign. 13 bis 17 gezeigte vierte Ausführungsform des Fluidisierungsapparates 1 ist im Wesentlichen baugleich mit der in den Fign. 1 bis 5 dargestellten ersten Ausführungsform des Fluidisierungsapparates 1. Der Unterscheid zwischen den beiden Ausführungsformen liegt in der Ausgestaltung des als Entleerrohr 4 ausgebildeten Materialaustrages 19 und damit verbunden der Anordnung des Steges 30.

Fig. 13 zeigt hierbei eine Draufsicht auf eine schematische Darstellung einer vierten Ausführungsform des als Wirbelschichtapparat 2 ausgebildeten Fluidisierungsapparates 1 mit einer Schnittebene A-A. Der Fluidisierungsapparat 1 umfasst eine eine zentrale Längsachse X-X aufweisende Fluidisierungseinheit 3 an der ein eine senkrecht zur Längsachse X-X stehende Mittelachse Y-Y umfassendes Entleerrohr 4 angeordnet ist, wobei die Mittelachse Y-Y und die Längsachse X-X die Schnittebene A-A aufspannen. Der Fluidisierungsapparat 1 befindet sich im Betriebszustand.

In Fig. 14 ist der Fluidisierungsapparat 1 im Betriebszustand gezeigt. Hierbei ist der die Verteilerkammer 5 von der Fluidisierungskammer 6 trennende, in der Ebene W-W liegende Anströmboden 7 oberhalb der oberen Kante 23b des Materialauslasses 21 angeordnet. Das zu behandelnde Material M wird in der Fluidisierungskammer 6 der Fluidisierungseinheit 3 des Fluidisierungsapparates 1 insbesondere durch das Prozessgas PG behandelt. Das Prozessgas PG durchströmt die Fluidisierungseinheit 3 vom Fluideinlass 27 über den perforierten Anströmboden 7 hin zum Fluidauslass 28.

Im Gegensatz zur ersten Ausführungsform ist in der vierten Ausführungsform der Fig. 14 dem als Entleerrohr 4 ausgebildeten Materialaustrag 19 ein einen Fluidanschlussauslass 39 umfassender Fluidanschluss 40 zur Bereitstellung eines Hilfsgases HG zugeordnet. Der Fluidanschlussauslass 39 ist im Bereich der Materialauslassfläche 22 des Materialauslasses 21 angeordnet.

Der als Entleerrohr 4 ausgebildete Materialaustrag 19 weist einen Einlegeboden 41 auf. Der Einlegeboden 41 unterteilt den Materialaustrag 19 in einen das behandelte Material M' aus der Fluidisierungseinheit 3 transportierenden Materialkanal 42 und einen das Hilfsgas HG führenden Fluidkanal 43. Im Einlegeboden 41 ist zweckmäßigerweise der Fluidanschlussauslass 39 angeordnet, sodass das Hilfsgas HG aus dem Fluidkanal 43 in den Materialkanal 42 überströmen kann. Der Fluidanschlussauslass 39 ist durch Bohrungen 44 im Einlegeboden 41 ausgebildet. Hierbei ist der Fluidanschlussauslass 39, insbesondere die Bohrungen 44, zweckmäßigerweise derart ausgebildet, dass das Hilfsgas HG eine Ausströmungsrichtung in Richtung des Austrages des behandelten Materials M' aus dem Fluidisierungsapparat 1 aufweist.

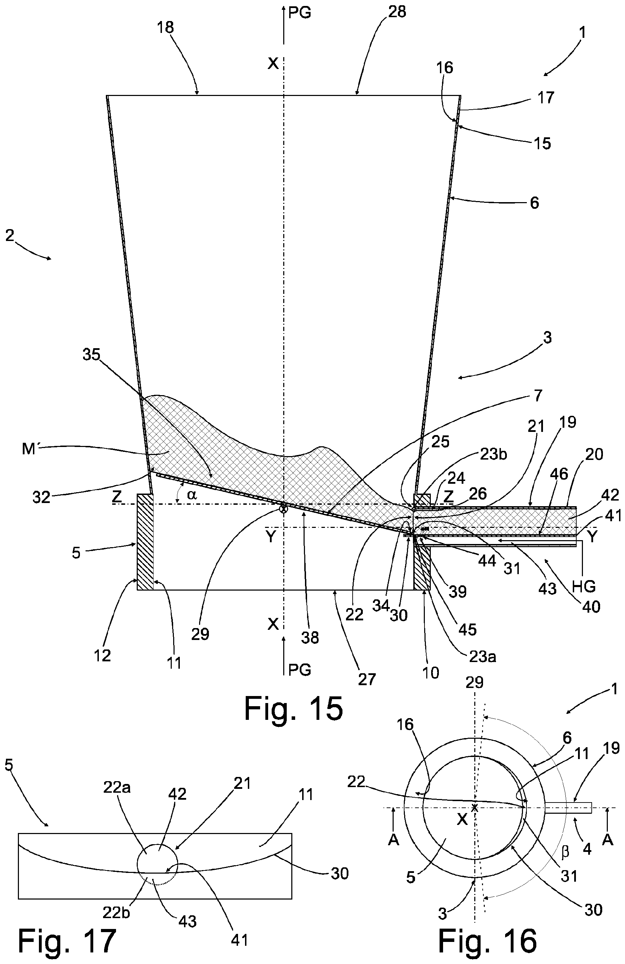

Fig. 15 zeigt den Fluidisierungsapparat 1 im Entleerzustand. Im Entleerzustand ist der Anströmboden 7 in der Entleerstellung angeordnet, d. h. der Anströmboden 7 ist derart relativ zur Fluidisierungseinheit 3 bewegt worden, dass dieser am Steg 30 angeordnet ist. Im Entleerzustand liegt der Anströmboden 7 auf dem Steg 30 auf. Die Entleerung des behandelten Materials M' erfolgt über den Materialkanal 42, wobei das Hilfsgas HG über den Fluidanschlussauslass 39 vom Fluidkanal 43 in den Materialkanal 42 strömt und dabei die Entleerung des behandelten Materials M' aus dem Fluidisierungsapparat 1 fördert.

In der Fig. 16 wird eine Draufsicht auf eine schematische Darstellung der vierten Ausführungsform eines Fluidisierungsapparates 1 entsprechend Fig. 13 gezeigt, wobei sich der Fluidisierungsapparat 1 im Entleerzustand befindet. Hierbei ist der Anströmboden 7 in einer um die Schwenkachse 29 um den Winkel α geschwenkten Position am Steg 30 angeordnet, wodurch sich zwischen dem Anströmboden 7 und der Fluidisierungseinheit 3, insbesondere der Verteilerkammerinnenwand 11 und/oder der Fluidisierungskammerinnenwand 16, der in der Spaltbreite variierende Spalt 32 ausbildet. Durch den Spalt 32 strömt während des Entleervorgangs Prozessgas PG, sodass kein behandeltes Material M' in die Verteilerkammer 5 gelangen kann.

Im Bereich der Materialauslassfläche 22 erstreckt sich der an der Verteilerkammerinnenwand 11 angeordnete Steg 30 in Umfangsrichtung. Die Oberseite 31 des Steges 30 ist an der oberen Kante 45 des Einlegebodens 41 angeordnet. Die Oberseite 31 des Steges 30 und die Oberseite 46 des Einlegebodens 41 bilden somit bündig aneinander anschließende, plane Oberseiten 31, 46 aus. Der Steg 30 ist hierbei sichelförmig ausgebildet, insbesondere mondsichelförmig. Der Steg 30 weist einen Winkel β von 160° auf.

Fig. 17 zeigt eine schematische Darstellung einer Projektion einer den Steg 30 und einen Materialauslass 21 umfassenden Verteilerkammerinnenwand 11 der vierten Ausführungsform des Fluidisierungsapparates 1 in Entleerstellung. Wie bereits in Fig. 16 beschrieben ist die Oberseite 31 des Steges 30 tangential an der oberen Kante 45 des Einlegeboden 41 des Materialaustrages 19 angeordnet. Die Oberseite 31 des Steges 30 und die Oberseite 46 des Einlegebodens 41 bilden somit bündig aneinander anschließende, plane Oberseiten 31, 46 aus. Die Materialauslassfläche 22 ist dadurch im Vergleich zu der Materialauslassfläche 22 der ersten Ausführungsform kleiner. Die Materialauslassfläche 22 ist somit unterteilt in eine dem Materialkanal 42 zugeordnete Materialauslassfläche 22a und eine dem Fluidkanal 43 zugeordnete Materialauslassfläche 22b. Hierbei ist die Materialauslassfläche 22a von der Absperrvorrichtung 24 im Entleerzustand freigegeben und die Materialauslassfläche 22b als Verteilerkammerinnenwand 11 ausgebildet.

Die in Fig. 17 nicht dargestellte Absperrvorrichtung 24 gibt in der Entleerstellung den Materialaustrag 19, insbesondere die Materialauslassfläche 22a, frei, sodass das behandelte Material M' aus der Fluidisierungskammer 6 der Fluidisierungseinheit 3 über den Materialkanal 42 effizient und unterstützt von dem aus dem Fluidkanal 43 ausströmenden Hilfsgas HG austragbar ist. Die projizierte Darstellung umfasst den sichelförmig ausgebildeten Steg 30. Der Steg 30 weist einen Winkel β von etwa 160° auf.

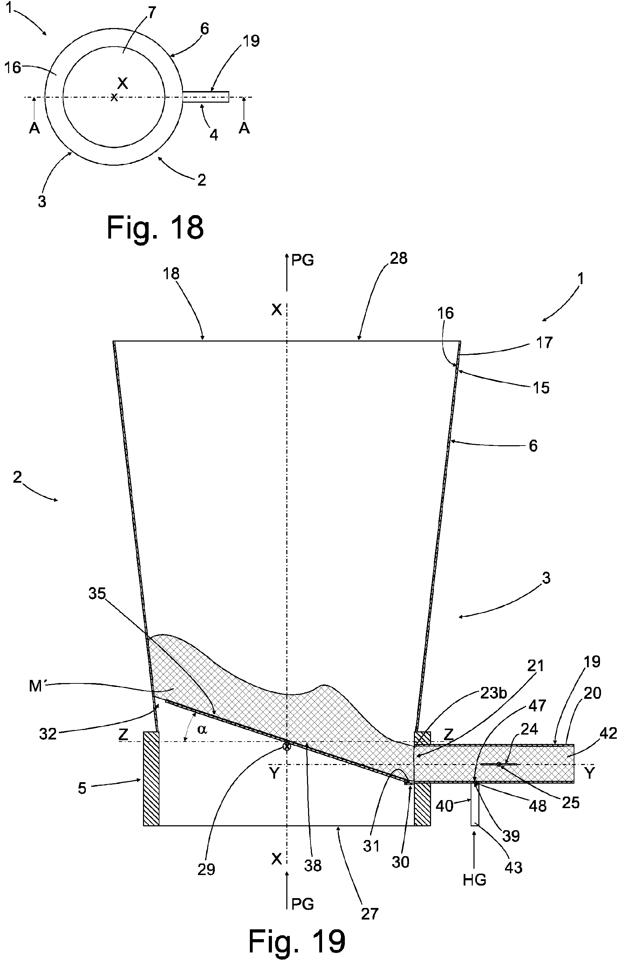

Die Fign. 18 und 19 zeigen eine weitere, fünfte Ausführungsform des Fluidisierungsapparates 1. Hierbei zeigt Fig. 18 eine Draufsicht auf eine schematische Darstellung der fünften Ausführungsform eines Fluidisierungsapparates 1 in Betriebsstellung mit einer Schnittebene A-A und Fig. 19 einen Schnitt entlang der in Fig. 18 dargestellten Schnittebene A-A durch die schematische Darstellung der fünften Ausführungsform des Fluidisierungsapparates 1 in Entleerstellung mit dem auf der Schwenkachse 29 angeordneten Anströmboden 7 in einer um einen Winkel α um die Schwenkachse 29 geschwenkten Position.

Die fünfte Ausführungsform ist im Wesentlichen baugleich mit der ersten Ausführungsform. Die beiden Ausführungsformen unterscheiden sich dadurch, dass der Steg 30 entgegen der Strömungsrichtung des Prozessgases PG unterhalb des Materialauslasses 21 angeordnet ist. Der Steg 30 ist von der unteren Kante 23a der Materialauslassfläche 22 beabstandet.

Des Weiteren unterscheiden sich die beiden Ausführungsformen dadurch voneinander, dass dem als Entleerrohr 4 ausgebildeten Materialaustrag 19 ein Fluidanschluss 40 mit einem Fluidanschlussauslass 39 zur Bereitstellung eines Hilfsgases HG zugeordnet ist. Der Fluidanschlussauslass 39 ist in der Entleerrohrwand 20 angeordnet und mit einer perforierten Abdeckung 47 versehen. Die die perforierte Abdeckung 47 durchdringenden Bohrungen 48 sind derart ausgerichtet, dass das aus dem Fluidanschluss 40 in den Materialkanal 42 austretende Hilfsgas HG in Richtung des Austrages des behandelten Materials M' aus dem Fluidisierungsapparat 1 strömt.

Die als Klappe 26 ausgebildete Absperrvorrichtung 24 ist um die Schwenkachse 25 schwenkbar angeordnet, wobei die Schwenkachse 25 senkrecht zur Mittelachse Y-Y angeordnet ist und diese kreuzt. Die Klappe 26 gibt in der in Fig. 19 dargestellten Entleerstellung den Materialaustrag 19 zur Entleerung der Fluidisierungskammer 6 frei.

## Patentansprüche

1. Verfahren zur Behandlung von partikelförmigem Material (M) in einem Fluidisierungsapparat (1), mit einer eine Längsachse (X-X) aufweisenden Fluidisierungseinheit (3), die einen die Fluidisierungseinheit (3) in eine Verteilerkammer (5) und eine oberhalb der Verteilerkammer (5) angeordnete Fluidisierungskammer (6) unterteilenden, perforierten Anströmboden (7) aufweist, wobei die Fluidisierungskammer (6) einen Materialeinlass (18) für das zu behandelnde Material (M) und die Verteilerkammer (5) einen über einen eine Materialauslassfläche (22), eine untere und eine obere Kante (23) aufweisenden Materialauslass (21) für das behandelte Material (M') verfügenden Materialaustrag (19) umfasst, und eine Absperrvorrichtung (24) den Materialaustrag (19) verschließt und wobei die Verteilerkammer (5) einen Fluideinlass (27) und die Fluidisierungskammer (6) einen Fluidauslass (28) für ein vom Fluideinlass (27) durch den perforierten Anströmboden (7) zum Fluidauslass (28) strömendes, das Material (M) in der Fluidisierungskammer (6) fluidisierendes Prozessgas (PG) umfasst, wobei in einem Betriebszustand zuerst die Fluidisierungskammer (6) über den Materialeinlass (18) mit zu behandelndem Material (M) befüllt und danach das Material (M) durch das durch die Fluidisierungskammer (6) strömende Prozessgas (PG) behandelt wird, **dadurch gekennzeichnet, dass** die Verteilerkammer (5) einen im Bereich der Materialauslassfläche (22) angeordneten, sich zumindest teilweise in Umfangsrichtung erstreckenden Steg (30) umfasst und nach dem Betriebszustand der relativ zur Fluidisierungseinheit (3) bewegbar angeordnete Anströmboden (7) derart in eine Entleerstellung bewegt wird, dass der Anströmboden (7) im Entleerzustand derart am Steg (30) angeordnet ist, dass sich eine Fluidverbindung zwischen dem in der Verteilerkammer (5) angeordneten Materialauslass (21) und der Fluidisierungskammer (6) am Anströmboden (7) vorbei ausbildet, und das behandelte Material (M') über den Materialauslass (21) aus der Fluidisierungseinheit (3) ausgetragen wird, wobei im Entleerzustand in der Entleerstellung des Anströmbodens (7) die Absperrvorrichtung (24) den Materialaustrag (19) freigibt.

2. Verfahren nach Anspruch 1, **dadurch gekennzeichnet, dass** die Fluidisierungseinheit (3) eine quer zur Längsachse (X-X) der Fluidisierungseinheit (3) verlaufende Schwenkachse (29) aufweist, an der der Anströmboden (7) schwenkbar angeordnet ist und um die der Anströmboden (7) nach der Behandlung des partikelförmigen Materials (M) geschwenkt wird, zweckmäßigerweise um 5° bis 10°.

3. Verfahren nach Anspruch 1, **dadurch gekennzeichnet, dass** der Anströmboden (7) in Achsrichtung (33) der Längsachse (X-X) verschiebbar angeordnet ist und in Achsrichtung (33) der Längsachse (X-X) in Form einer Linearbewegung verschoben wird, zweckmäßigerweise bis der Anströmboden (7) unterhalb der unteren Kante (23a) positioniert ist.

4. Verfahren nach Anspruch 2 und 3, **dadurch gekennzeichnet, dass** der Anströmboden (7) beim Verbringen in die Entleerstellung eine Schwenkbewegung und eine Linearbewegung in beliebiger Reihenfolge nacheinander oder zeitgleich ausführt.

5. Verfahren nach einem der vorhergehenden Ansprüche, **dadurch gekennzeichnet, dass** der Anströmboden (7) in die Entleerstellung dergestalt relativ zur Fluidisierungseinheit (3) bewegt wird, sodass zumindest ein Teil des Anströmbodens (7) unterhalb der unteren Kante (23a) des Materialauslasses (21) positioniert ist.

6. Verfahren nach Anspruch 5, **dadurch gekennzeichnet, dass** der Anströmboden (7) in die Entleerstellung dergestalt relativ zur Fluidisierungseinheit (3) bewegt wird, sodass der Anströmboden (7) unterhalb der unteren Kante (23a) des Materialauslasses (21) positioniert ist.

7. Verfahren nach einem der vorhergehenden Ansprüche, **dadurch gekennzeichnet, dass** der Materialaustrag (19) eine Absperrvorrichtung (24) aufweist, die den Materialaustrag (19) freigibt, sobald der Anströmboden (7) sich in der Entleerstellung befindet.

8. Verfahren nach Anspruch 7, **dadurch gekennzeichnet, dass** die Absperrvorrichtung (24) den Materialaustrag (19) freigibt, sobald zumindest ein Teil des Anströmbodens (7) unterhalb der unteren Kante (23a) des Materialauslasses positioniert ist.

9. Verfahren nach einem der vorhergehenden Ansprüche, **dadurch gekennzeichnet, dass** dem insbesondere als Entleerrohr (4) ausgebildeten Materialaustrag (19) ein einen Fluidanschlussauslass (39) umfassender Fluidanschluss (40) zur Bereitstellung eines Hilfsgases (HG) zugeordnet ist, wobei das Hilfsgas (HG) über den Fluidanschlussauslass (39) in den Materialaustrag (19) zumindest dann strömt, wenn die Absperrvorrichtung (24) den Materialaustrag (19) freigibt, um den Austrag des behandelten Materials (M') zu fördern.

## Claims

1. Method for treating particulate material (M) in a fluidising device (1), with a fluidising unit (3) having a longitudinal axis (X-X), the fluidising unit having a perforated distributor plate (7) dividing the fluidising unit (3) into a distributor chamber (5) and a fluidising chamber (6) arranged above the distributor chamber (5), wherein the fluidising chamber (6) comprises a material inlet (18) for the material (M) to be treated and the distributor chamber (5) comprises a material discharge (19) having a material outlet (21) for the treated material (M') having a lower and an upper edge (23) over a material outlet surface (22) and a barrier device (24) closes the material discharge (19) and wherein the distributor chamber (5) comprises a fluid inlet (27) and the fluidising chamber (6) comprises a fluid outlet (28) for a process gas (PG) fluidising the material (M) in the fluidising chamber (6) flowing from the fluid inlet (27) through the perforated distributor plate (7) to the fluid outlet (28), wherein in an operating condition, the fluidising chamber (6) is first filled through the material inlet (18) with material (M) to be treated and the material (M) is then treated by the process gas (PG) flowing through the fluidising chamber (6), **characterised in that** the distributor chamber (5) comprises a bar (30) extending at least partly in a circumferential direction, arranged in the region of the material outlet surface (22) and depending on the operating condition, the distributor plate (7) movably arranged relative to the fluidising unit (3) is moved to an emptying position such that the distributor plate (7) is arranged in the emptying condition on the bar (30) such that a fluid connection is formed past the distributor plate (7) between the material outlet (21) arranged in the distributor chamber (5) and the fluidising chamber (6), and the treated material (M') is discharged from the fluidising unit (3) through the material outlet (21), wherein in the emptying condition in the emptying position of the distributor plate (7), the barrier device (24) releases the material discharge (19).

2. Method according to Claim 1, **characterised in that** the fluidising unit (3) has a swivel axis (29) extending transversely to the longitudinal axis (X-X) of the fluidising unit (3), on which swivel axis the distributor plate (7) is arranged to swivel and around which the distributor plate (7) is swivelled after the particulate material (M) treatment, expediently by 5° to 10°.

3. Method according to Claim 1, **characterised in that** the distributor plate (7) is arranged movably in the axial direction (33) of the longitudinal axis (X-X) and is moved in the axial direction (33) of the longitudinal axis (X-X) as a linear movement, expediently until the distributor plate (7) is positioned below the lower edge (23a) .

4. Method according to Claim 2 and 3, **characterised in that** the distributor plate (7) performs a swivelling movement and a linear movement in any order one after the other or at the same time when moving to the emptying position.

5. Method according to one of the preceding claims, **characterised in that** the distributor plate (7) is moved to the emptying position relative to the fluidising unit (3) in such a way that at least a part of the distributor plate (7) is positioned below the lower edge (23a) of the material outlet (21).

6. Method according to Claim 5, **characterised in that** the distributor plate (7) is moved to the emptying position relative to the fluidising unit (3) in such a way that the distributor plate (7) is positioned below the lower edge (23a) of the material outlet (21).

7. Method according to one of the preceding claims, **characterised in that** the material discharge (19) has a barrier device (24), which releases the material discharge (19) as soon as the distributor plate (7) is in the emptying position.

8. Method according to Claim 7, **characterised in that** the barrier device (24) preferably releases the material discharge (19) as soon as at least a part of the distributor plate (7) is positioned below the lower edge (23a) of the material outlet.

9. Method according to one of the preceding claims, **characterised in that** a fluid connection (40) comprising a fluid connection outlet (39) for supplying an auxiliary gas (HG) is assigned to the material discharge (19) designed as an emptying pipe (4), wherein the auxiliary gas (HG) flows through the fluid connection outlet (39) into the material discharge (19) at least when the barrier device (24) releases the material discharge (19) so as to assist the discharge of the treated material (M').

## Revendications

1. Procédé de traitement d'un matériau (M) particulaire dans un appareil de fluidisation (1), avec une unité de fluidisation (3) présentant un axe longitudinal (X-X), qui présente un fond de soufflage (7) perforé divisant l'unité de fluidisation (3) en une chambre de distribution (5) et en une chambre de fluidisation (6) disposée au-dessus de la chambre de distribution (5), dans lequel la chambre de fluidisation (6) comprend une entrée de matériau (18) pour le matériau (M) à traiter et la chambre de distribution (5) comprend une évacuation de matériau (19) disposant d'une sortie de matériau (21) pour le matériau traité (M') présentant une surface de sortie de matériau (22), un bord inférieur et un bord supérieur (23), et un dispositif d'obturation (24) ferme l'évacuation de matériau (19), et dans lequel la chambre de distribution (5) comprend une entrée de fluide (27) et la chambre de fluidisation (6) comprend une sortie de fluide (28) pour un gaz de traitement (PG) s'écoulant depuis l'entrée de fluide (27) jusqu'à la sortie de fluide (28) à travers le fond de soufflage (7) perforé, fluidisant le matériau (M) dans la chambre de fluidisation (6), dans lequel dans un état de fonctionnement, la chambre de fluidisation (6) est remplie d'abord du matériau (M) à traiter par l'intermédiaire de l'entrée de matériau (18) puis le matériau (M) est traité par le gaz de traitement (PG) s'écoulant à travers la chambre de fluidisation (6), **caractérisé en ce que** la chambre de distribution (5) comprend une entretoise (30) disposée dans la zone de la surface de sortie de matériau (22), s'étendant au moins en partie dans la direction périphérique et, après l'état de fonctionnement, le fond de soufflage (7) disposé de manière à pouvoir être déplacé par rapport à l'unité de fluidisation (3) est déplacé de telle manière dans une position de vidange que le fond de soufflage (7) est disposé sur l'entretoise (30) dans l'état de vidange de telle manière qu'il se forme une liaison fluidique sur le fond de soufflage (7) entre la sortie de matériau (21) disposée dans la chambre de distribution (5) et la chambre de fluidisation (6), et le matériau traité (M') est évacué hors de l'unité de fluidisation (3) par l'intermédiaire de la sortie de matériau (21), dans lequel dans l'état de vidange, dans la position de vidange du fond de soufflage (7), le dispositif d'obturation (24) dégage l'évacuation de matériau (19).

2. Procédé selon la revendication 1, **caractérisé en ce que** l'unité de fluidisation (3) présente un axe de pivotement (29) s'étendant de manière transversale par rapport à l'axe longitudinal (X-X) de l'unité de fluidisation (3), sur lequel le fond de soufflage (7) est disposé de manière à pouvoir pivoter et autour duquel le fond de soufflage (7) est pivoté après le traitement du matériau (M) particulaire, de manière opportune de 5° à 10°.

3. Procédé selon la revendication 1, **caractérisé en ce que** le fond de soufflage (7) est disposé de manière à pouvoir être coulissé dans une direction axiale (33) de l'axe longitudinal (X-X) et est coulissé dans la direction axiale (33) de l'axe longitudinal (X-X) sous la forme d'un mouvement linéaire, de manière opportune jusqu'à ce que le fond de soufflage (7) soit positionné sous le bord inférieur (23a) .

4. Procédé selon la revendication 2 et 3, **caractérisé en ce que** le fond de soufflage (7) exécute lorsqu'il est amené dans la position de vidange un mouvement de pivotement et un mouvement linéaire dans un ordre quelconque l'un après l'autre ou simultanément.

5. Procédé selon l'une quelconque des revendications précédentes, **caractérisé en ce que** le fond de soufflage (7) est déplacé dans la position de vidange de telle manière par rapport à l'unité de fluidisation (3) qu'au moins une partie du fond de soufflage (7) est positionnée sous le bord inférieur (23a) de la sortie de matériau (21).

6. Procédé selon la revendication 5, **caractérisé en ce que** le fond de soufflage (7) est déplacé dans la position de vidange de telle manière par rapport à l'unité de fluidisation (3) que le fond de soufflage (7) est positionné sous le bord inférieur (23a) de la sortie de matériau (21).

7. Procédé selon l'une quelconque des revendications précédentes, **caractérisé en ce que** l'évacuation de matériau (19) présente un dispositif d'obturation (24), qui dégage l'évacuation de matériau (19) dès que le fond de soufflage (7) se trouve dans la position de vidange.

8. Procédé selon la revendication 7, **caractérisé en ce que** le dispositif d'obturation (24) dégage l'évacuation de matériau (19) dès qu'au moins une partie du fond de soufflage (7) est positionnée sous le bord inférieur (23a) de la sortie de matériau.

9. Procédé selon l'une quelconque des revendications précédentes, **caractérisé en ce qu'**un raccord de fluide (40) comprenant une sortie de raccord de fluide (39), destiné à fournir un gaz auxiliaire (HG) est associé à l'évacuation de matériau (19) réalisée en particulier en tant que tube de vidange (4), dans lequel le gaz auxiliaire (HG) s'écoule dans l'évacuation de matériau (19) en passant par la sortie de raccord de fluide (39) au moins lorsque le dispositif d'obturation (24) dégage l'évacuation de matériau (19) pour favoriser l'évacuation du matériau traité (M').
